# EUROPEAN PATENT SPECIFICATION

(11) **EP 0 647 338 B1**
(45) Date of publication and mention of the grant of the patent: **05.06.1996**
(21) Application number: 93913421.9
(22) Date of filing: 24.06.1993
(51) Int. Cl.: G06F 3/02

(54) **A KEYBOARD ASSEMBLY**
TASTATUR-AUFBAU
ENSEMBLE CLAVIER

(30) Priority: 24.06.1992 GB 9213352; 04.12.1992 GB 9225434
(43) Date of publication of application: 12.04.1995
(73) Proprietor: LYONS, Timothy, Simon, Bristol BS17 2JZ (GB)
(72) Inventor: LYONS, Timothy, Simon, Bristol BS17 2JZ (GB)
(74) Representative: Slingsby, Philip Roy
(86) International application number: GB9301324
(87) International publication number: WO9400810

(56) References cited:
- GB-A- 2 249 200

## Description

The present invention relates to a keyboard assembly.

It is often necessary to input numbers when using a computer. Therefore, for convenience, the main keyboards of many computers include numeric keypads, in which numeric keys are grouped together. However, numbers which are to be entered are often the results of calculations and it is inconvenient for users to have to copy such results from, say, a calculator into the computer - even using a numeric keypad. Also, copying such results is a potential source of error.

Due to considerations of compactness the main keyboards of lap-top and notebook computers often incorporate "embedded" numeric keypads, in which a group of alphabetic keys can be given the effect of a numeric keypad when a control key is pressed. Such embedded keypads are inconvenient in use and, since their keys have two functions which must be displayed on their key caps, their key caps are difficult to read.

UK Patent Application 2249200A describes a keyboard assembly for connection by wire in series between a host computer and the host computer's main keyboard. One or other of the keyboard assembly and the main keyboard is operable at anyone time to allow numeric data to be input to the central processing unit of the host computer. The keyboard assembly and the main keyboard cannot be operated at the same time; and the keyboard assembly cannot operate as a numeric keypad, wherein each keypress on the keyboard assembly is transmitted as keyboard input to the host computer.

According to the present invention there is provided a keyboard assembly for transmitting data to a central processing unit remote from the keyboard assembly, the keyboard assembly comprising: a plurality of keys for accepting numeric input data and command input data from a user; numeric processing means for locally processing the numeric input data in dependence on the command input data to produce numeric output data; display means for displaying the numeric input data and the output data; interface means for transmitting the output data as keyboard data to the remote central processing unit; and mode selection means for allowing a user to select between a first mode of operation of the keyboard assembly in which output is disabled from being transmitted to the remote central processing unit, a second mode of operation in which the numeric processing means produces numeric output data whose numeric value is the same as the value of the numeric input data, and a third mode of operation in which in response to a transmit signal supplied as command input data to the numeric processing means the numeric value displayed by the display means is transmitted to the remote central processing unit.

This allows a user to perform calculations using the keyboard assembly and to then pass the results of these calculations directly to the central processing unit ("CPU") of a "host" computer; to perform calculations using the keyboard assembly whilst entering data using the main keyboard of the host computer; and to use the keyboard assembly as a numeric keypad.

The interface means is preferably arranged so as to allow the CPU to accept keyboard input data from a "main" keyboard whilst the keyboard assembly is operating. Most preferably the main keyboard and the keyboard assembly are connected in parallel to the CPU. The main keyboard, suitably including alphabetic keys, is for providing second keyboard input data to the CPU. It is suitably a keyboard supplied with or as part of the host computer and it may be integral within the CPU (as in a laptop or notebook computer) or separate and connected via a cable, as with most desk-top personal computers.

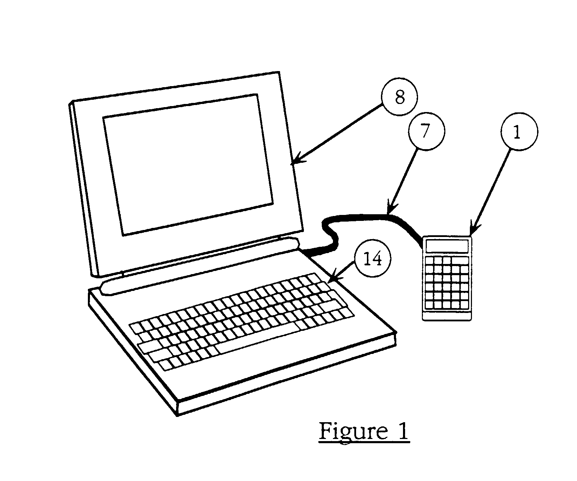

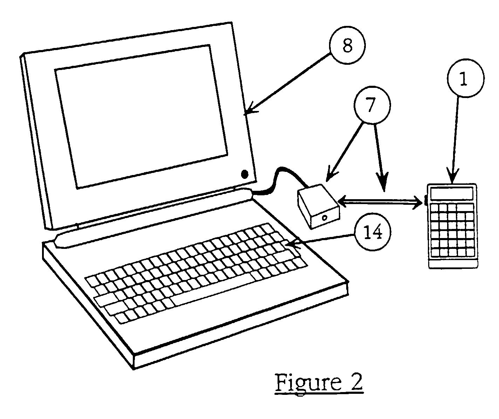

The CPU (the processor section of the host computer which normally houses the memory, mass storage devices and ports for connection of peripheral devices such as keyboard, screen and printers) is suitably part of a host computer, for example a personal computer, mainframe, minicomputer, laptop or notebook situated remotely from the keyboard assembly and is suitably connected to the keyboard assembly by communicating means. The communicating means is preferably an indirect wireless link such as a low-power radio link or infrared optical link as shown in Figure 2. Alternatively, the communicating means may be a connecting lead as shown in Figure 1. The host's main keyboard and the keyboard assembly may conveniently be placed so that they can both be used by a user for passing data to the CPU, as indicated in Figures 1 and 2. Both the keyboard assembly and the main keyboard may operate independently of each other and may be left permanently connected to the host computer's CPU without the one interfering with the operation of the other.

The keyboard input data is suitably in such a form that it may be accepted by the CPU as input from a keyboard, defining input characters.

The keyboard assembly suitably has no alphabetic keys. The display means is suitably for locally displaying the numeric input data and the output data.

The processing means is suitably capable of processing the numeric input data arithmetically in response to the command input data to produce the numeric output data, for example by functions such as addition, subtraction, multiplication and division.

The mode selection means suitably comprises input means such as a key or switch providing input to processing means in the keyboard assembly which controls the interface means and the numeric processing means as necessary in each mode. The display means suitably includes status means for providing an indication of the mode in which the keyboard assembly is operating.

The present invention will now be described by way of example with reference to the accompanying drawings, in which:
Figure 1 is an illustration of a keyboard assembly connected to a host computer by direct means, such as an electrical cable;
Figure 2 is an illustration of a keyboard assembly connected to a host computer by indirect means such as an infrared, optical or low-power radio link;
Figure 3 is a plan view of a keyboard assembly together with a view of another host computer;
Figure 4 is a block diagram illustrating schematically a host computer and the internal architecture of the keyboard assembly shown in Figure 3;
Figure 5 is a block diagram illustrating schematically the operation, in a first mode, of the keyboard assembly shown in Figure 3;
Figure 6 is a block diagram illustrating schematically the operation, in a second mode, of the keyboard assembly shown in Figure 3;
Figure 7 is a block diagram illustrating schematically the operation, in a third mode, of the keyboard assembly shown in Figure 3; and
Figure 8 shows the display portion of the keyboard assembly shown in figure 3.

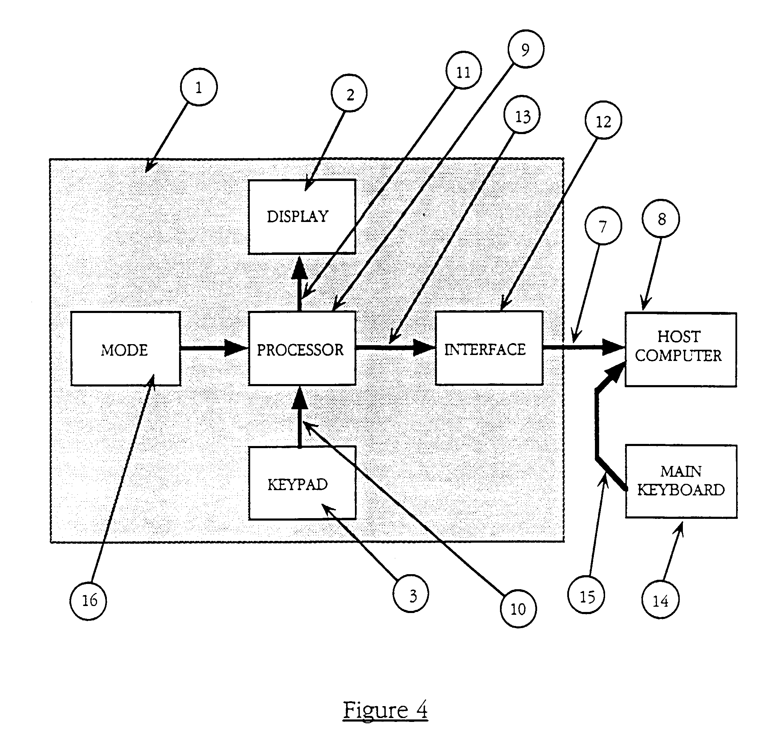

Referring to Figures 1 to 4, the keyboard assembly has an outer case 1 housing a display 2 and a keypad 3 comprising numeric keys 4, command keys 5 and control keys 6. The keyboard assembly is connected by connecting link 7 (which may be an electrical cable making a physical connection, or a wireless link, such as a radio link or optical or infrared link) to a host computer 8.

The case 1 contains a processor 9 for accepting input data 10 from the keypad (in the form of numeric input signals from numeric keys 4 and command input signals from the command keys 5 and control keys 6), processing the input data to produce output data, and transmitting the output data to the display 2 (as indicated at 11) or via interface 12 (as indicated at 13) and connecting link 7 to the host computer 8. The keyboard assembly may be used to perform calculations on the numeric input data in dependence on the command input data and the results of those calculations may be displayed by the display 2 and/or passed to the host computer 8 as keyboard input signals. Alternatively, the input data may be passed directly as keyboard input signals to the host computer without calculations being performed on it. The host computer has a main keyboard 14 which can also be used to pass the keyboard input signals to the host computer via link 15.

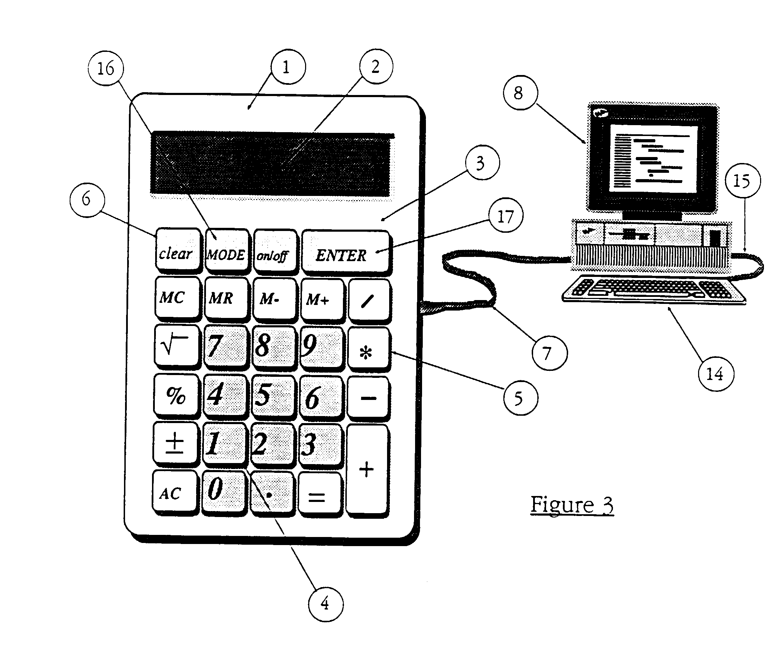

The keypad 3 has 11 numeric keys 4 (representing the digits from 0 to 9 and a decimal point) by which a user may enter numeric data in the same way as data is entered using the numeric keys of a conventional keyboard or calculator; and 9 command keys 5, by which a user may enter command data in the same way as command data is conventionally entered into a calculator. The command keys allow the user to add, subtract, multiply, divide, change the sign of and perform percentage calculations on numbers, to calculate the square roots of numbers and, by using a "=" key, to force or conclude a calculation. An "AC" key is provided to clear all registers in the processor and to cancel any ongoing calculation at the time the key is pressed. There are also provided 4 control keys 6 which allow the user to switch the keyboard assembly on and off (shown as the "on/off" key in Figure 3), to select the mode it is to operate in (shown as the "MODE" key in Figure 3), to send the output data as displayed on the display 2 to host computer 8 via interface 12 (shown as the "ENTER" key 16 in Figure 3), and to clear the last entry (shown as the "clear" key in Figure 3). A memory is provided for storing and recalling numbers, controlled by 4 keys which allow data to be added to or subtracted from memory, to display the contents of memory on the display 2 or to clear the contents of memory (keys M+, M-, MR and MC respectively). The contents of the memory remain unchanged when the "AC" key is pressed.

The processor 9 is in the form of one or more integrated circuits which perform arithmetic calculations as necessary and produce output in a suitable form for driving the display 2 and the interface 12. The interface and processor may be physically contained within a single purpose-designed integrated circuit, such as a Micro-Controller chip, which has registers and ports suitable for interfacing with both display and serial communications systems.

The display 2 is a Liquid Crystal Display (LCD) or combined LCD and decoder sub-assembly having a numeric portion, for displaying the numeric input or output data passed to it by the processor 9, and a status portion for displaying the current mode of the keyboard assembly.

The interface 12 may be a Universal Asynchronous Receiver Transmitter (UART) or suitable functional equivalent processor which accepts data from the processor 9 and passes it to the host computer 8 in a form acceptable to the host computer as keyboard input. Thus, when entering numeric data into the host computer a user may either use the host computer's main keyboard 14 or the keyboard assembly, with the same effect. Output data from the interface 12 to the host computer is synchronised by the interface with the host computer's strobe signal, or other synchronizing protocol. The keyboard assembly is connected to the host computer in such a way that keyboard input data from the keyboard assembly is accepted by the host computer in the same way as input from its own main keyboard 14 but so that the host computer's main keyboard 14 can function as normal in sending data to the host computer. For example, where the host computer is an Apple Macintosh type computer, the interface 12 is sent to the Apple Desktop Bus (ADB) port of the host computer; where the host computer is a PC-type computer the data from the interface 12 is sent to an external keyboard port of the host computer.

The keyboard assembly includes a "MODE" key 16 with which a user may select any one of three modes in which the keyboard assembly is to operate. Data is routed through the keyboard assembly and processed by the processor 9 in dependence on which mode is currently selected.

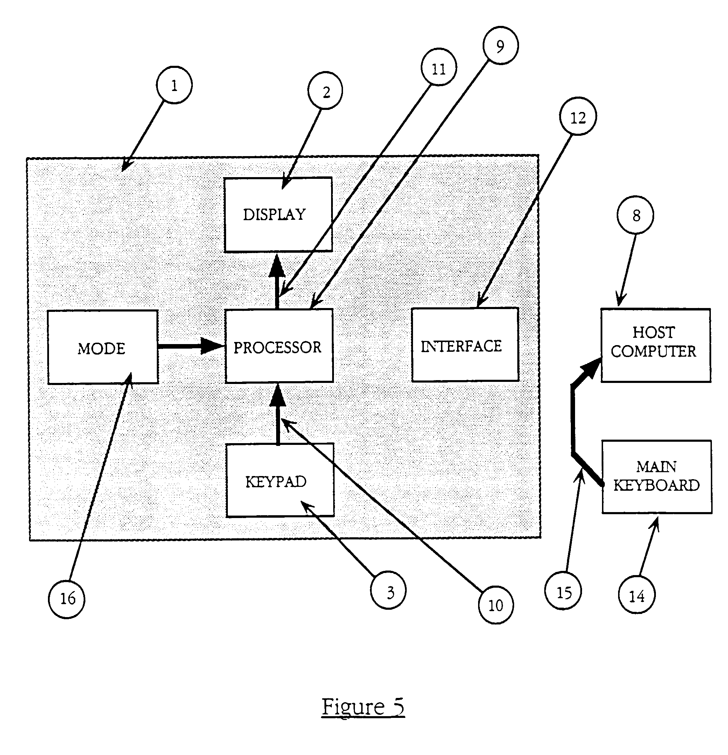

In a first mode, illustrated in Figure 5, the keyboard assembly functions generally as does a conventional numeric calculator. Input data 10 from the keypad 3 passes to the processor 9 which processes the data in dependence on input data from the command keys 5 to produce output data 11. This is passed to the display 2 where it is displayed. In this first mode, all calculations and key-presses made at the keyboard assembly are disabled from reaching interface 12 and hence cannot be sent to host computer 8 via connecting link 7.

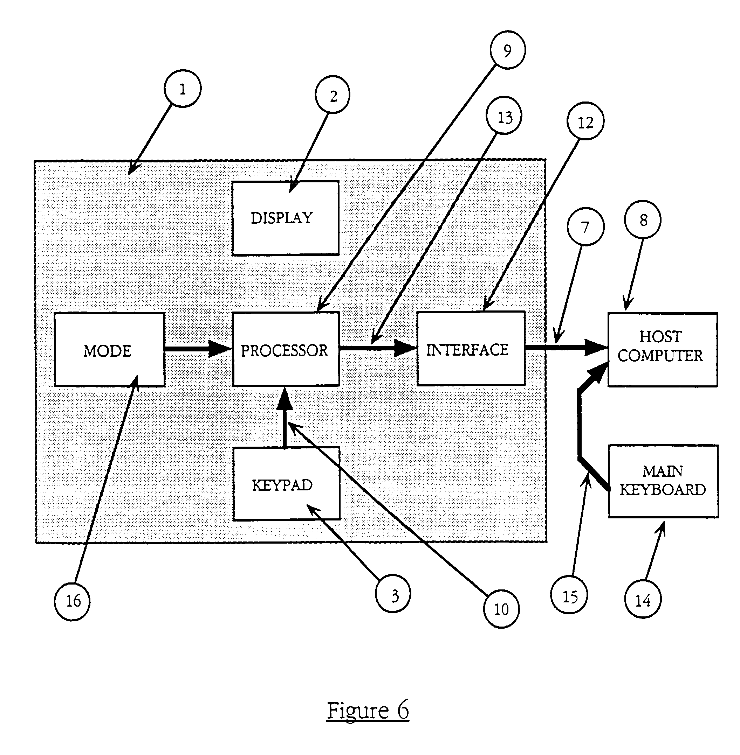

In a second mode, illustrated in Figure 6, the keyboard assembly functions as an extension of the main keyboard 14 of the host computer 8. Input data 10 from the keypad 3 is passed, content unaltered, by the processor 9 as output data 13 to interface 12 from which it is passed to the host computer 8 as keyboard input signals, i.e. in the same form as input from the host computer's own main keyboard 14 would be passed to the host computer.

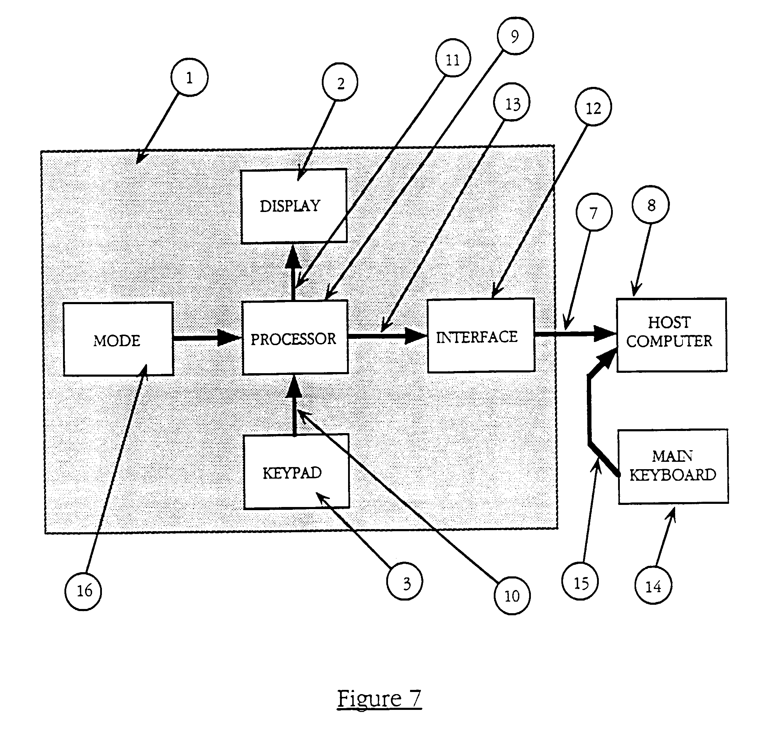

In a third mode, illustrated in Figure 7, the keyboard assembly functions generally as in the first mode. However, in response to a command signal from the keyboard assembly's keypad (for example the pressing of control key 17 in Figure 1), data representing the keystrokes necessary to type, using the host computer's main keyboard 14, the number currently displayed on the display 2 is passed by the processor 9 to the interface 12 and from there to the host computer 8 as keyboard input data. Data representing the digits of the displayed number are passed in series, from most significant to least significant digit, by the processor 9 to the interface 12 and from there to the host and from there to the host computer 8 as keyboard input signals. For example, if the number "347" were displayed on the display 2 the processor 9 would cause the interface 12 to pass data representing the keystrokes "3", "4", "7" in that order.

In each mode keyboard input signals from the main keyboard 14 can be passed to the host computer 8 via lead 15.

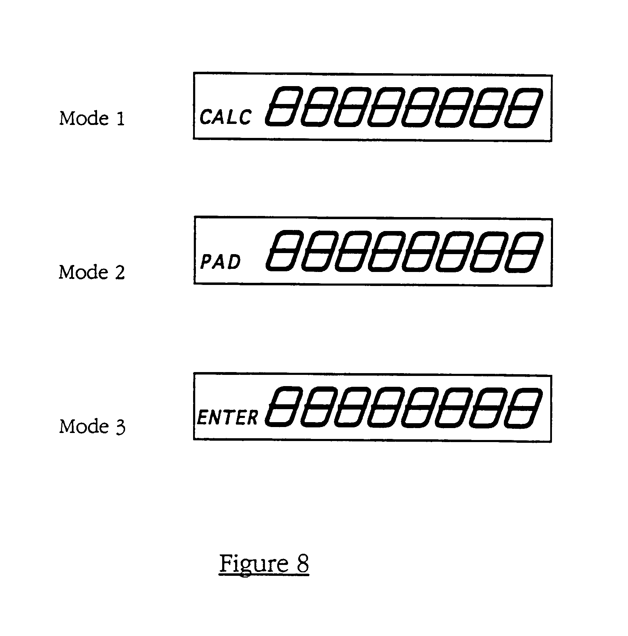

Referring now to Figure 8, the status portion 18 of the display 2 displays an indication of the mode in which the keyboard assembly is currently operating, for example by showing "CALC" for the first mode, "Pad" for the second mode and "enter" for the third mode. These words can each be displayed using a standard 7-segment LCD display. Other types of LCD may be used which would allow alphanumeric display with even greater clarity, or a customized LCD could be created which could indicate the keyboard assembly's current mode much as some current calculators display "M" to indicate the presence of numbers held in memory, and other such modal information.

An Erasable Programmable Read Only Memory (EPROM) is included in the keyboard assembly to store data relating to the words to be displayed in the status portion of the display. This EPROM may form part of the processor chip.

The numeric portion 19 of the display 2 operates in the first and third modes in the same way as the display of a conventional calculator: numbers are displayed as they are entered at the keypad and the result of a calculation is displayed after a calculation has been performed. In the second mode, the numeric portion of the display may be kept blank. Alternatively, in the second mode the numeric portion of the display could provide a visual indication of the key presses on the keypad.

Selection of mode is achieved by pressing control key 16, known as the "mode" key. Pressing this key switches the keyboard assembly into each of its three modes in rotation. However, the keyboard assembly can be prevented from being set into its second or third modes if it is not connected to a host computer, by electronically testing for the presence of a strobe signal from a host computer when the second or third mode is to be selected.

The keyboard assembly may be powered by one or more AA or AAA-type battery cells, a high capacity button cell or a high power solar cell. Alternatively, if it is connected electrically to the host computer i.e. not via a wireless link, it may contain a rechargeable battery, such as a nickel-cadmium or nickel-metal-hydride battery which may be recharged from the voltages present in the connecting cable, which are supplied by the host computer. All circuitry within the keyboard assembly uses low-power CMOS chip technology so as to minimise power drain from its own batteries, or from the host computer.

The keyboard assembly is capable of entering a "sleep" state, to save power, in which it merely monitors signals from the keypad and checks for the presence of a strobe signal from a host computer at the interface 12. The keyboard assembly enters the "sleep" state in response to no key having been pressed for a predetermined time (for example 5 minutes) provided no strobe signal is being received by the interface 12. The assembly enters its "operational" state from its "sleep" state in response to the presence of a strobe signal at the interface 12 or to the pressing of a key on the keypad 3, thus allowing the keypad assembly to automatically "wake" when the host computer is switched on.

## Claims

1. A keyboard assembly (1) for transmitting data to a central processing unit (8) remote from the keyboard assembly, the keyboard assembly comprising:
a plurality of keys (3,4,5) for accepting numeric input data and command input data from a user;
numeric processing mean (9) for locally processing the numeric input data in dependence on the command input data to produce numeric output data;
display means (2) for displaying the numeric input data and the output data;
interface means (12) for transmitting the output data as keyboard data to the remote central processing unit; and
mode selection means (6,16) for allowing a user to select between a first mode of operation of the keyboard assembly in which output is disabled from being transmitted to the remote central processing unit, a second mode of operation in which the numeric processing means produces numeric output data whose numeric value is the same as the value of the numeric input data, and a third mode of operation in which in response to a transmit signal supplied as command input data to the numeric processing means the numeric value displayed by the display means is transmitted to the remote central processing unit.

2. A keyboard assembly as claimed in claim 1, wherein the interface means is such as to allow a main keyboard (14) to transmit keyboard data to the central processing unit during operation of the keyboard assembly.

3. A keyboard assembly as claimed in claim 2, wherein the keyboard assembly and the main keyboard are connected to the central processing unit in parallel.

4. A keyboard assembly as claimed in any preceding claim, wherein the keyboard assembly is connected to the central processing unit via a wireless link.

5. A keyboard assembly as claimed in claim 4, wherein the wireless link is an optical link.

6. A keyboard assembly as claimed in claim 5, wherein the wireless link is an infrared link.

7. A keyboard assembly as claimed in claim 4, wherein the wireless link is a radio link.

## Patentansprüche

1. Tastaturanordnung (1) zum Übermitteln von Daten zu einer entfernt angeordneten zentralen Recheneinheit (18), mit:
einer Vielzahl von Tasten (3,4,5) zum Aufnehmen von numerischen Eingabedaten und Befehlseingabedaten von einem Benutzer;
numerischen Verarbeitungsmitteln (9) zum lokalen Verarbeiten der numerischen Eingabedaten in Abhängigkeit von den Befehlseingabedaten, um numerische Ausgabedaten zu erzeugen;
Anzeigemittel (2) zum Anzeigen der numerischen Eingabedaten und der Ausgabedaten;
Schnittstellenmittel (12) zum Übertragen der Ausgangsdaten als Tastaturdaten zu der entfernt angeordneten zentralen Verarbeitungseinheit; und
Modus-Wahlmitteln (6,16), um es dem Benutzer zu ermöglichen, zwischen einem ersten Betriebsmodus der Tastaturanordnung, in der Ausgabedaten nicht zu der beabstandet angeordneten zentralen Rechnereinheit übertragen werden können, und einem zweiten Betriebsmodus zu unterscheiden, in dem die numerischen Rechenmittel numerische Ausgangsdaten erzeugen, deren numerische Werte gleich den Werten der numerischen Eingangsdaten sind, und einem dritten Betriebsmodus, in dem als Antwort auf ein Übergabsignal, daß als Befehlseingangsdatum an die numerischen Rechenmittel gegeben wird, der numerische Wert, der durch das Anzeigemittel angezeigt wird, zu der beabstandet angeordneten zentralen Recheneinheit übermittelt wird.

2. Tastaturanordnung nach Anspruch 1, wobei die Schnittstellenmittel so ausgebildet sind, daß es einer Haupttastatur (14) möglich ist, Tastaturdaten an die zentrale Recheneinheit zu übermitteln, während die Tastaturanordnung in Betrieb ist.

3. Tastaturanordnung nach Anspruch 2, wobei die Tastaturanordnung und die Haupttastatur prallel mit der zentralen Recheneinheit verbunden sind.

4. Tastaturanordnung nach einem der vorhergehenden Ansprüche, wobei die Tastaturanordnung mit der zentralen Recheneinheit über eine drahtlose Verbindung verbunden ist.

5. Tastaturanordnung nach Anspruch 4, wobei die drahtlose Verbindung eine optische Verbindung ist.

6. Tastaturanordnung nach Anspruch 5, wobei die drahtlose Verbindung eine Infrarot-Verbindung ist.

7. Tastaturanordnung nach Anspruch 4, wobei die drahtlose Verbindung eine Funkverbindung ist.

## Revendications

1. Ensemble de clavier (1) pour transmettre des données à une unité de traitement centrale (8) à distance de l'ensemble de clavier, l'ensemble à clavier comprenant :
une pluralité de touches (3, 4, 5) pour recevoir d'un utilisateur des données d'entrée numériques et des données d'entrée de commande ;
des moyens de traitement numérique (9) pour traiter localement les données d'entrée numérique en fonction des données d'entrée de commande afin de produire des données de sortie numérique ;
des moyens d'affichage (2) pour afficher les données d'entrée numériques et les données de sortie ;
des moyens d'interface (11) pour transmettre les données de sortie en tant que données de clavier à l'unité de traitement centrale à distance ; et
des moyens de sélection de mode (6, 16) pour permettre à un utilisateur de choisir entre un premier mode de fonctionnement de l'ensemble de clavier dans lequel la sortie est empêchée d'être transmise à l'unité de traitement centrale à distance, un deuxième mode de fonctionnement dans lequel les moyens de traitement numérique produisent des données de sortie numériques dont la valeur numérique est identique à la valeur des données d'entrée numérique, et un troisième mode de fonctionnement dans lequel, en réponse à un signal de transmission fourni en tant que données d'entrée de commande aux moyens de traitement numérique, la valeur numérique affichée par les moyens d'affichage est transmise à l'unité de traitement centrale à distance.

2. Ensemble de clavier selon la revendication 1, dans lequel les moyens d'interface sont tels qu'ils permettent à un clavier principal (14) de transmettre des données de clavier à l'unité de traitement centrale pendant le fonctionnement de l'ensemble de clavier.

3. Ensemble de clavier selon la revendication 2, dans lequel l'ensemble de clavier et le clavier principal sont connectés en parallèle à l'unité de traitement centrale.

4. Ensemble de clavier selon l'une quelconque des revendications précédentes, dans lequel l'ensemble de clavier est connecté à l'unité de traitement centrale par l'intermédiaire d'une liaison sans fil.

5. Ensemble de clavier selon la revendication 4, dans lequel la liaison sans fil est une liaison optique.

6. Ensemble de clavier selon la revendication 5, dans lequel la liaison sans fil est une liaison à infrarouges.

7. Ensemble de clavier selon la revendication 4, dans lequel la liaison sans fil est une liaison radio.
